# EUROPÄISCHE PATENTANMELDUNG

(11) **EP 1 026 187 A1**
(43) Veröffentlichungstag der Anmeldung: **09.08.2000**
(21) Anmeldenummer: 99403291.0
(22) Anmeldetag: 24.12.1999
(51) Int. Cl.: C08G 18/60, H01B 3/30

(54) **Backlack**

(30) Priorität: 27.01.1999 DE 19903137
(71) Anmelder: ALCATEL, 75008 Paris (FR)
(72) Erfinder: Nagel, Rolf, 49565 Bramsche (DE); Boockmann, Gerhard, 97618 Niederlauer (DE); Preux, Laurent, 38460 Chozeau (FR)
(74) Vertreter: Döring, Roger, Dipl.-Ing.

(57) **Zusammenfassung**

Vorgeschlagen wird ein Backlack mit einem thermoplastischen Polyamid. Er zeichnet sich dadurch aus, daß der Lack ein Vernetzungsmittel umfaßt, das unter Wärmeeinwirkung eine chemische Vernetzung des thermoplastischen Polymers bewirkt, wobei das Vernetzungsmittel einen mehrwertigen Alkohol, ein Polyisocyanat sowie ein Polyol umfaßt. Ferner ist ein Draht mit einer äußeren Beschichtung aus einem derartigen Backlack beschrieben.

## Beschreibung

Die Erfindung bezieht sich auf einen Backlack, insbesondere für die Beschichtung eines Drahtes, mit einem thermoplastischen Polyamid sowie auf einen Draht, der mit einem derartigen Lack beschichtet ist.

Backlacke lassen sich in flüssigem Zustand auf die Oberfläche von Substraten aufbringen und ermöglichen nach dem Aushärten deren Verklebung durch Erhitzung. Von Bedeutung sind speziell Backlackdrähte, die aus einem elektrischen Leiter und einer äußeren Schicht aus einem Backlack bestehen, zwischen denen sich in der Regel eine oder mehrere elektrisch isolierende Lackschichten befinden. Backlackdrähte dienen insbesondere zur Herstellung von Spulen, etwa als Wicklungen von Motoren, Elektromagneten oder Ablenkspulen für Bildschirme. Dabei werden die geformten Wicklungen mit Hilfe der Backlackschicht durch Erwärmung untereinander verklebt, so daß eine Verschmelzung zu einem mechanisch festen Verbund erfolgt.

Im Stande der Technik besteht der Backlack aus einem thermoplastischen Polymer, das zum Aufbringen auf das Substrat in einem Lösungsmittel gelöst ist. Nach dem Aufbringen des Lackes durchläuft das Substrat im allgemeinen zur Trocknung einen Ofen. Meist wird der Backlack in mehreren Durchläufen schichtweise aufgebracht und jeweils nachfolgend getrocknet.

Einen derartigen Backlack beschreibt die Druckschrift US 4,420,535. Seine Basis ist ein aromatisch-aliphatisches Random-Copolyamid mit der Struktureinheit

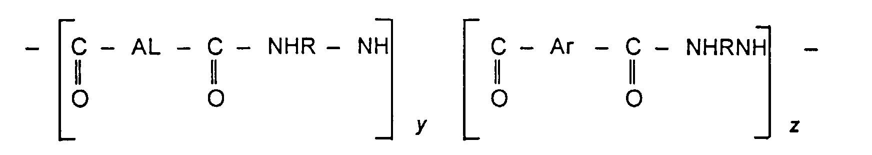

Dabei ist AL der divalente Kohlenwasserstoffrest einer unsubstituierten aliphatischen Dicarboxylsäure mit bevorzugt 6 bis 36 Kohlenstoffatomen. AL ist in der Regel (CH₂)ₓ, wobei x von 4 bis 34, vorzugsweise 6 bis 12 beträgt. Alternativ kann AL der Kohlenwasserstoffrest einer ungesättigten Dicarboxylsäure sein. R ist Tolyl, Phenyl oder 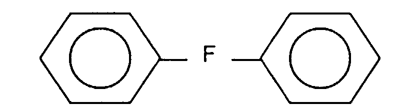 wobei F entweder O, CH₂ oder SO₂ ist. Denkbar ist, daß zumindest ein Teil von R cycloaliphatisch ist, z.B. Cyclohexen. Ar ist p-Phenyl. *y* beträgt zwischen 35% und 80%, vorzugsweise etwa 65%, *z* zwischen 65% und 20%, bevorzugt etwa 35% der Struktureinheiten. Die Herstellung des Copolyamides erfolgt auf im Stande der Technik bekannte Weise, etwa durch Reaktion von Dicarboxylsäuren mit Diisocyanaten und/oder Diaminen in einem Lösungsmittel, etwa N-Methyl-2-Pyrrolidon (NMP). Das Aufbringen des Polyamids als Backlack wird in der Regel gleichfalls in einem Lösemittel auf Amidbasis wie NMP oder einer Mischung von NMP mit aromatischen Kohlenwasserstoffen vorgenommen.

Mit derartigen Backlacken beschichtete Drähte haben sich für Wicklungen der Statoren von Elektromotoren bewährt. Hingegen erweisen sie sich für die Wicklungen von Rotoren als unzureichend, da die Lacke bei höherer Temperartur erweichen. Entsprechende Spulen sind bei den Betriebstemperarturen von z.T. über 155°C und unter den Fliehkräften von Motoren, deren Umdrehungszahl häufig im Bereich einiger 10.000 Umdrehungen pro Minute liegt, nicht ausreichend stabil. Aus diesem Grund ist es im Stande der Technik üblich, Rotoren von Elektromotoren mit einem flüssigen Duroplast zu tränken, das nachfolgend erhärtet. Diese Vorgehensweise ist jedoch im Vergleich zur Verklebung backlackbeschichteter Drähte aufwendig und zudem mit der Emission gesundheitsgefährdender Stoffe verbunden.

Davon ausgehend hat es sich die Erfindung zur Aufgabe gestellt, einen Backlack zu entwickeln, der auch bei hohen Temperaturen kraftbelastbar ist.

Diese Aufgabe wird erfindungsgemäß dadurch gelöst, daß der Lack ein Vernetzungsmittel umfaßt, welches unter Wärmeeinwirkung eine chemische Vernetzung des thermoplastischen Polymers bewirkt, wobei das Vemetzungsmittel einen mehrwertigen Alkohol, ein Polyisocyanat sowie ein Polyol umfaßt.

Durch die chemische Vernetzung des thermoplastischen Polyamids, das die Basis des Backlackes bildet, steigt dessen Wiedererweichungstemperatur erheblich an. Insbesondere ist es möglich, daß die Wiedererweichungstemperatur größer als die Temperatur zur Verbackung des Lackes ist. In der Folge bleibt die mechanische Belastbarkeit des Backlackes auch bei Temperaturen im Bereich der Verbackungstemperatur erhalten, während im Stande der Technik gebräuchliche Backlacke bei einer derartigen Temperatur grundsätzlich erweichen.

Von entscheidender Bedeutung ist, daß das Vemetzungsmittel beim Aufbringen und Härten des Backlackes, insbesondere beim Austreiben eines Lösungsmittels in einem Ofen, nicht oder allenfalls zum Teil reagiert. Ansonsten wird die zur Verklebung von Substraten notwendige Wiedererweichung des Backlackes behindert. Der Anteil des Vemetzungsmittels am Backlack ist zweckmäßig gering. Bevorzugt ist ein Anteil bis etwa 30 Gewichtsprozent, insbesondere um 20 Gewichtsprozent bezogen auf das thermoplastische Polyamid.

Ein besonderer Vorteil des erfindungsgemäßen Backlackes besteht darin, daß sich seine Eigenschaften beim Aufbringen und Trocknen nicht wesentlich von herkömmlichen Backlacken unterscheiden. Insbesondere sind zur Herstellung von Backlackdrähten gebräuchliche Lackiermaschinen und -öfen einsetzbar. Zudem zeigen die Lacke eine gute Lackierfähigkeit bei unveränderten Kosten. Die verbesserte Festigkeit bei Temperaturen oberhalb von 150°C ermöglichen es erstmals, Backlacke auch zur Stabilisierung der Wicklungen von Rotoren einzusetzen.

Das Vernetzungsmittel umfaßt miteinander reaktionsfähige Monomere, von denen zumindest ein Monomer mit dem thermoplastischen Polyamid reaktionsfähig ist. Die Reaktion der Monomere untereinander und mit dem Polyamid erfolgt unter der Wärmeeinwirkung bei der Backtemperatur des Lackes. Vorzugsweise ist zumindest eines der Monomere ein Edukt des thermoplastischen Polyamid bzw. reagiert bei der Vernetzung zu einer seiner Struktureinheiten. Um die Verarbeitung zu erleichtern wird vorgeschlagen, daß das Vernetzungsmittel ein Lösungsmittel für die Monomere und das thermoplastische Polyamid enthält.

Nach dem Aufbringen des Backlackes auf das Substrat erfolgt seine Trocknung in aller Regel für einige Sekunden in einem Ofen bei einer Temperatur zwischen etwa 300 und 400°C. Um weiterhin gebräuchliche Öfen nutzen zu können, ist es von Vorteil, wenn die Vernetzungsdauer des Vernetzungsmittels bei der Trocknungstemperatur groß gegen die Trocknungszeit des Backlackes ist.

Als thermoplastische Polymere haben sich Polyamide bewährt, insbesondere Copolyamide, wie sie in der Einleitung beschrieben sind. Zu ihrer Herstellung wird bevorzugt eine Mischung von Diisocyanaten verwendet, in der das molare Verhältnis von Toluoldiisocyanat (TDI) zu 4,4' Methylendi(phenylisocyanat) (MDI) zwischen 50:50 und 100:0, vorzugsweise um 60:40 beträgt. Ein besonderer Vorteil von Backlacken auf Polyamidbasis ist ihre gute chemische Beständigkeit, speziell die geringe Löslichkeit in Lösungsmitteln wie Benzin und Öl.

Eine besonders große Festigkeit des Backlackes bei hohen Temperaturen läßt sich erreichen, indem das Polyamid auf oben beschriebene Weise aus aromatischen und aliphatischen Struktureinheiten aufgebaut ist. Bewährt haben sich insbesondere molare Verhältnisse aliphatischer zu aromatischer Struktureinheiten von 60:40 bis 50:50 Molprozent, vorzugsweise etwa 56:44 Molprozent. Während im Stande der Technik bekannte Copolyamide bei diesen Mischungsverhältnissen eine erhebliche Abnahme der Wärmefestigkeit gegenüber dem erreichbaren Maximalwert aufweisen, zeigen erfindungsgemäß vernetzte Polymere bei diesem Verhältnis eine gesteigerte Wärmefestigkeit. Auch bei im Stande der Technik gebräuchlichen Copolyamiden mit abweichenden Verhältnissen läßt sich jedoch die Wärmefestigkeit durch eine erfindungsgemäße Vernetzung steigern.

Ein bevorzugtes Vernetzungsmittel, speziell für Polyamide, umfaßt einen mehrwertigen Alkohol. Bewährt haben sich zweiwertige Alkohole, insbesondere Propylenglykol oder Dipropylenglykol
HO - CH(CH₃) - CH₂ - O - CH₂ - CH(CH₃)- OH.

Weiterhin umfaßt das Vernetzungsmittel ein Polyisocyanat, wie es zum Beispiel auch als Edukt eines Polyamides verwendbar ist.

Zweckmäßig ist der Backlack eine Mischung aus zumindest einem thermoplastischen Polymer, zumindest einem Vernetzungsmittel und einem oder mehreren Lösungsmitteln. Für Backlacke auf Basis von Copolyamiden haben sich als Lösungsmittel beispielsweise NMP oder Mischungen von NMP mit aromatischen Kohlenwasserstoffen, z. B. Cresol oder Xylol bewährt. Eine derartige Mischung läßt sich als homogene, lagerbare Flüssigkeit herstellen.

Der beschriebene Backlack ist zur Beschichtung beliebiger Substrate geeignet, die unter Wärmeeinwirkung verklebt werden sollen. Bevorzugt ist er jedoch zur Beschichtung von Drähten, etwa aus Kupfer, die beispielsweise zum Wickeln von Spulen vorgesehen sind.

Vorzugsweise wird der Backlack nicht unmittelbar auf die Oberfläche eines Drahtes, sondern auf eine innere Isolierung aufgebracht. Auf diese Weise werden Kurzschlüsse bei der Verbackung ausgeschlossen und die elektrische Isolierung verbessert. Als innere Isolierung sind gleichfalls Lacke auf Basis von Polymeren, beispielsweise Polyester, Polyesterimid oder Polyamidimid geeignet. Denkbar ist es, zwischen der inneren Isolierung und dem Backlack einen Überzug aus weiteren Lackschichten vorzusehen.

Bevorzugt umfassen sowohl der Backlack als auch eine innere Isolierung sowie ein ggf. vorhandener Überzug mehrere Schichten. Durch das mehrschichtige Aufbringen wird die Qualität der Beschichtungen verbessert, insbesondere eine Blasenbildung beim Entweichen von Lösungsmitteln vermieden.

Im nachfolgenden Beschreibungsteil sind Ausführungsbeispiele der Erfindung näher erläutert. Die Zeichnung zeigt
Figur 1: Querschnitte durch Backlackdrähte,
Figur 2: Bindungsfestigkeit des Backlacks in Abhängigkeit von der Temperatur.

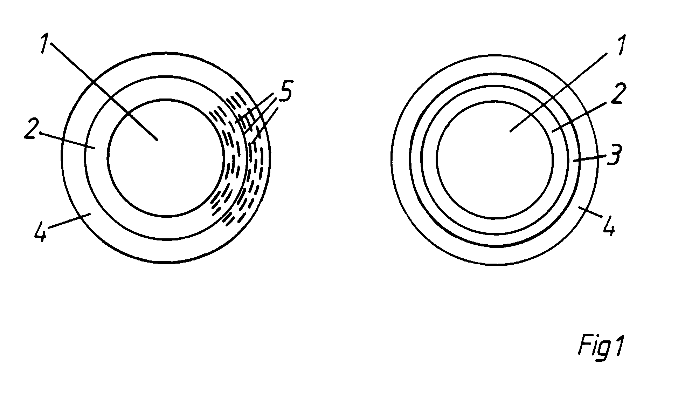

In Fig. 1 sind schematische, nicht maßstabsgerechte Schnitte durch unterschiedliche Backlackdrähte wiedergegeben. Im Zentrum befindet sich jeweils ein Leiter (1), etwa ein Kupferdraht, dessen Durchmesser beispielsweise zwischen 0,1 und 5 mm beträgt. Der Leiter (1) ist in eine Isolierung (2) eingebettet, die z.B. aus einem Polyesterimid besteht. Die Dicke der Isolierung (2) beträgt vorzugsweise zwischen 10 und 100 um. Zur Anpassung der mechanischen und chemischen Eigenschaften an unterschiedliche Anforderungen ist es in vielen Fällen zweckmäßig, über der Isolierung (2) einen Überzug (3) vorzusehen, beispielsweise aus Polyamidimid, der gleichfalls isolierend wirkt. In der Regel ist die Dicke des Überzugs (3) geringer als die der darunterliegenden inneren Isolierung (2). Außenseitig weist der Draht eine Beschichtung mit einem Backlack (4) auf. Er ermöglicht die Verbackung von in einer Spule aneinander anliegenden Drähten zu einem festen Verbund, indem die Spule erwärmt wird. Um eine gleichmäßige und hohe Qualität der Beschichtungen zu erreichen erweist es sich als zweckmäßig, Isolierung (2), Überzug (3) und Backlack (4) jeweils in mehreren Schichten (5) als Lack aufzubringen.

Basis des Backlackes ist ein Copolyamid, wie es im Stande der Technik bekannt ist. Der molare Anteil seiner aliphatischen zu aromatischen Struktureinheiten beträgt 56% zu 44%. Als Vernetzungsmittel dient eine Lösung aus folgenden Anteilen:

| | |
|---|---|
| Dipropylenglykol | 33,03 g, |
| Xylol | 2,80 g, |
| Desmodur VL | 18,92 g, |
| NMP | 17,32 g. |

Desmodur VL ist ein Polyisocyanat des Herstellers Bayer, das zu 31,5 Gew.-% aus Isocyanat besteht. Als Backlack wurde eine homogene Flüssigkeit aus 136 g des Polyamids, 27,2 g des Vernetzungsmittels und 18,1 g NMP hergestellt. Mit dem Lack wurde ein Kupferdraht mit einer inneren Isolierung beschichtet.

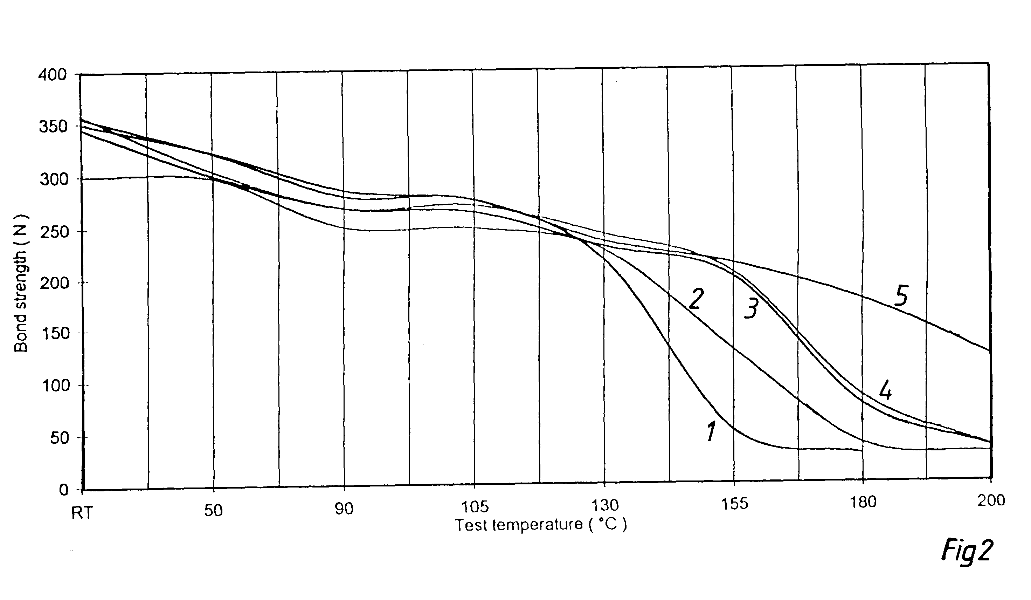

Fig. 2 zeigt die nach der Norm IEC 851-3 gemessene Bindungsfestigkeit unterschiedlicher Backlackdrähte in Abhängigkeit von der Temperatur.

Als Vergleichsbeispiel (Kurve 1) diente ein handelsüblicher Backlackdraht des Herstellers Lacroix & Kress mit der Bezeichnung T 180HR, der mit einem Backlack aus Polyamid beschichtet ist. Die Backzeit betrug 30 Sekunden bei 200°C. Wie erkennbar ist, zeigt der Backlack im Bereich bis 130°C eine hohe mechanische Festigkeit, die jedoch bei höheren Temperaturen rasch abnimmt. Insbesondere oberhalb von 155°C ist der Draht nicht mehr für mechanische Belastungen geeignet, wie sie in Rotoren von Motoren auftreten.

Erfindungsgemäßen Backlackdrähte wurden gemäß der Beschreibung hergestellt und für unterschiedliche Zeiten bei 200°C miteinander verbacken (Probe 2: 30 Sek.; Probe 3: 5 Min.; Probe 4: 2,5 Min.; Probe 5: 20 Min.). Während sich im Temperatubereich bis 130 °C lediglich geringe Unterschiede zum Vergleichsbeispiel (Kurve 1) zeigen, ist die Festigkeit bei höheren Temperaturen, insbesondere zwischen 155 und 200°C deutlich größer. Bei zunehmender Backdauer steigt die mechanische Festigkeit des vernetzten Backlackes in diesem Temperaturbereich zudem deutlich an. Insbesondere wird erreicht, daß die Wiedererweichungstemperatur des Lackes bei hinreichender Backzeit bis zu 300°C beträgt und somit die Backtemperatur von 200°C erheblich übersteigt.

Im Ergebnis entsteht ein Backlack von hoher mechanischer Festigkeit bei hohen Temperaturen sowie damit beschichtete Drähte, die speziell für den Einsatz in den Rotoren von Motoren gut geeignet sind.

## Patentansprüche

1. Backlack mit einem thermoplastischen Polyamid aus aromatischen und aliphatischen Strukturen, **dadurch gekennzeichnet**, daß der Lack ein Vernetzungsmittel umfaßt, welches unter Wärmeeinwirkung eine chemische Vernetzung des thermoplastischen Polyamids bewirkt, wobei das Vernetzungsmittel einen mehrwertigen Alkohol, ein Polyisocyanat sowie ein Polyol umfaßt.

2. Backlack nach Anspruch 1, **dadurch gekennzeichnet**, daß das Vernetzungsmittel eine Mischung miteinander reaktionsfähiger Monomere umfaßt, von denen zumindest ein Monomer mit dem thermoplastischen Polymer reaktionsfähig ist.

3. Backlack nach Anspruch 2, **dadurch gekennzeichnet**, daß ein Monomer des Vernetzungsmittels einer Struktureinheit des thermoplastischen Polymers entspricht.

4. Backlack nach einem der vorhergehenden Ansprüche, **dadurch gekennzeichnet**, daß die Vernetzungsdauer groß gegen die Trocknungszeit des Backlacks ist.

5. Backlack nach einem der vorhergehenden Ansprüche, **dadurch gekennzeichnet**, daß das molare Verhältnis aliphatischer zu aromatischer Struktureinheiten 60:40 bis 50:50, vorzugsweise 56:44 beträgt.

6. Backlack nach einem der vorhergehenden Ansprüche, **dadurch gekennzeichnet**, daß der Backlack eine Mischung von jeweils einem oder mehreren thermoplastischen Polymeren, Vernetzungsmitteln und Lösungsmitteln ist.

7. Draht mit einer äußeren Beschichtung aus einem Backlack, **dadurch gekennzeichnet**, daß die Beschichtung ein Backlack (4) nach einem der vorhergehenden Ansprüche ist.

8. Draht nach Anspruch 7, **dadurch gekennzeichnet**, daß der Backlack (4) auf eine innere Isolierung (2) oder einen auf der Isolierung (2) befindlichen Überzug (3) aufgebracht ist.

9. Draht nach Anspruch 7 oder 8, **dadurch gekennzeichnet**, daß der Backlack (4) und/oder die innere Isolierung (2) und/oder der Überzug (3) aus mehreren Schichten (5) besteht.
